Europäisches Patentamt

European Patent Office

Office européen des brevets

(19)

(11) Numéro de publication: **0 222 789 B1**

(12) **FASCICULE DE BREVET EUROPEEN**

(45) Date de publication du fascicule du brevet: **06.02.91**

(51) Int. Cl.⁵: **C 08 L 23/04** // (C08L23/04, 23:08)

(21) Numéro de dépôt: **86902429.9**

(22) Date de dépôt: **22.04.86**

(86) Numéro de dépót international: **PCT/FR86/00134**

(87) Numéro de publication internationale: **WO 86/06394 06.11.86 Gazette 86/24**

(54) **COMPOSITION THERMOPLASTIQUE COMPRENANT UN COPOLYMERE A BASE D'ETHYLENE ET D'ANHYDRIDE MALEIQUE, ET ARTICLES INDUSTRIELS OBTENUS A PARTIR D'UNE TELLE COMPOSITION.**

(30) Priorité: **24.04.85 FR 8506203**

(43) Date de publication de la demande:
**27.05.87 Bulletin 87/22**

(45) Mention de la délivrance du brevet:
**06.02.91 Bulletin 91/06**

(84) Etats contractants désignés:
**BE CH DE FR GB IT LI LU NL SE**

(56) Documents cités:
**EP-A-0 104 097**
**GB-A-1 359 173**

(73) Titulaire: **ATOCHEM**
**4 & 8, Cours Michelet La Défense 10**
**F-92800 Puteaux (FR)**

(72) Inventeur: **GUERDOUX, Lionel**
**5, résidence le Toupin**
**F-76170 Lillebonne (FR)**
Inventeur: **HERT, Marius**
**21, chaussée Brunehaut Estrée Cauchy**
**F-62690 Aubigny en Artois (FR)**

(74) Mandataire: **Rochet, Michel et al**
**ATOCHEM Département Propriété Industrielle**
**La Défense 10 Cédex 42**
**F-92091 Paris La Défense (FR)**

Le dossier contient des informations techniques présentées postérieurement au dépôt de la demande et ne figurant pas dans le présent fascicule.

# EP 0 222 789 B1

**Description**

Cette composition est destinée en particulier à la fabrication de films présentant de bonnes propriétés d'adhérence. Elle peut en outre contenir des charges minérales et conduire à la fabrication d'articles industriels présentant une résistance au choc améliorée.

On connaît par le document EP-A-104097 une composition comprenant de 25 à 95% en poids d'un polymère radicalaire de l'éthylène pouvant être un homopolymère de l'éthylène ou un copolymère de l'éthylène et de faibles quantités d'au moins un monomère copolymérisable avec l'éthylène, et de 5 à 75% en poids d'un copolymère d'éthylène et d'alpha-oléfine comprenant au moins 4 atomes de carbone, de densité comprise entre 0,905 et 0,940.

Les compositions de polymères renforcées par des charges minérales sont déjà connues et sont couramment utilisées industriellement; elles permettent de rendre plus rigides les polymères de base. Ainsi le document GB-A-1.359.173 décrit une composition moulable comprenant, pour 100 parties en poids:

60 à 90 parties en poids d'un homopolymère d'éthylène ayant une densité d'au moins 0,94 et un indice de fluidité standard de 2 à 30,

jusqu'à 40 parties en poids d'un matériau organique cristallin ayant une température de fusion inférieure à 100°C et une température de cristallisation d'au moins 60°C, et

10 à 40 parties en poids d'une charge minérale ayant une chaleur spécifique par unité de volume supérieure à 0,35 calories/cc/°C.

La charge minérale peut être choisie parmi talc, mica, verre, silice, oxydes de magnésium, calcium, zinc, titane ou antimoine, carbonates de magnésium ou calcium, sulfates de magnésium, calcium ou baryum. Le matériau organique cristallin peut être un copolymère (ayant un indice de fluidité de 3 à 500) comprenant de préférence de 75 à 90 % en poids d'éthylène. Une telle composition est destinée à la frisure des cheveux et, en conséquence, doit posséder d'une part une capacité à friser les cheveux dans un délai relativement court à la température habituelle de frisure, et d'autre part des propriétés physiques permettant aux utilisateurs domestiques de l'employer en toute sécurité.

Le problème posé par la présente invention est tout différent. Dans le cas de compositions chargées moulables, la présente invention vise en effet à améliorer la résistance au choc, en particulier à froid, de manière à permettre la fabrication d'articles industriels susceptibles d'être soumis à des chocs. D'autre part dans le cas de compositions non chargées, la présente invention vise à la mise au point de films conservant l'essentiel des propriétés favorables des polymères d'éthylène et possédant en outre de remarquables propriétés d'adhérence sur divers substrats.

La présente invention a pour premier objet une composition thermoplastique constituée, pour 100 parties en poids, de 1 à 93 parties en poids d'au moins un polymère ou copolymère (A) à base d'éthylène, ayant une densité comprise entre 0,905 et 0,945 choisi parmi les copolymères d'éthylène et d'au moins une alpha-oléfine possédant au moins 3 atomes de carbone, et les polymères ou copolymères obtenus par voie radicalaire et ayant une densité comprise entre 0,910 et 0,935, et de 7 à 99 parties en poids d'au moins un copolymère (B) comprenant:

de 83 à 98,7% en moles de motifs dérivés de l'éthylène,

de 1 à 14% en moles de motifs dérivés d'au moins un ester de l'acide (méth)acrylique, et

de 0,3 à 3% en moles de motifs dérivés de l'anhydride maléïque.

Par polymère ou copolymère (A) à base d'éthylène, on entend un homopolymère de l'éthylène obtenu par polymérisation par voie radicalaire, ou bien un copolymère de l'éthylène et d'au moins une alpha-oléfine possédant au moins 3 atomes de carbone obtenu en présence de catalyseurs du type Ziegler, ou encore un copolymère radicalaire de l'éthylène et de faibles quantités d'au moins un comonomère polaire tel que notamment l'acétate de vinyle, les (méth)acrylates d'alkyle dont le groupe alkyle a de 1 à 6 atomes de carbone ou l'oxyde de carbone. Les homopolymères ou copolymères obtenus par voie radicalaire ont généralement une densité comprise entre 0,910 et 0,935. Le taux de cristallinité du polymère (A) est avantageusement au moins égal à 30% notamment en vue d'obtenir une composition ayant une tenue satisfaisante à la température.

Le copolymère (B) peut être obtenu, par exemple sous haute pression et à haute température par terpolymérisation, par exemple dans les conditions décrites dans les documents FR-A-2.498.609, FR-A-2.569.411 et FR-A-2.569.412, ou bien par greffage d'anhydride maléique sur un copolymère d'éthylène et d'au moins un ester de l'acide (méth)acrylique.

L'indice de fluidité du copolymère (B), mesuré dans les conditions standards (190°C, charge de 2,16 kg) de la norme ASTM 1238, est avantageusement compris entre 0,5 et 200 dg/min.

Parmi les compositions selon l'invention, celles qui, pour 100 parties en poids, comprennent de 67 à 93 parties du polymère (A) et de 7 à 33 parties du copolymère (B) peuvent en outre comprendre au moins une charge minérale à raison de jusqu'à 100 parties en poids pour 100 parties en poids du mélange des polymères (A) et (B). Cette charge peut être notamment choisie parmi les fibres de verre, les billes de verre, le mica, le talc, les argiles, les aluminates et silicates, par exemple de calcium, l'alumine, l'hydrate d'alumine, le noir de carbone, les fibres de carbone ou de bore, l'amiante, les oxyde, hydroxyde, carbonate et sulfate de magnésium ou de calcium, les oxydes de fer, antimoine, zinc, le dioxyde de titane, le sulfate de baryum, la bentonite, la terre de diatomées, le kaolin, la silice, le quartz, le feldspath.

2

Parmi les compositions selon l'invention, celles qui, pour 100 parties en poids, comprennent de 1 à 67 parties en poids de polymère (A) et de 33 à 99 parties en poids de copolymère (B) sont plus particulièrement destinées à être transformées en films.

Pour l'obtention de compositions ayant un ensemble de propriétés satisfaisantes, le rapport de l'indice de fluidité standard du copolymère (B) à l'indice de fluidité standard du polymère (A) est avantageusement compris entre 1 et 400.

Les compositions selon l'invention peuvent être obtenues selon un procédé choisi parmi:

mélangeage simultané par tout moyen connu, notamment dans un malaxeur ou une extrudeuse, des polymères (A) et (B) et, le cas échéant, de la charge minérale.

mélangeage d'un mélange-maître de deux quelconques des constituants de la composition, lorsque celle-ci contient une charge minérale, avec le troisième constituant de la composition.

lorsque la composition comprend une charge minérale, mélangeage du polymère (A) et de la charge minérale préalablement enrobée de copolymère (B), l'enrobage étant obtenu en introduisant la charge dans une solution de copolymère (B), puis en évaporant le solvant. Des solutions appropriées de copolymère (B) sont obtenues lorsque le solvant est choisi parmi les hydrocarbures aliphatique, cycloaliphatiques et aromatiques ayant de 5 à 12 atomes de carbone, les cétones, les hydrocarbures chlorés, les acétates et les éthers de polyols et que la concentration du copolymère (B) dans le solvant est au plus égale à 15% en poids.

L'invention a pour second objet des articles industriels comprenant au moins un produit obtenu par transformation d'une composition telle que décrite précédemment. Il peut s'agir notamment de films possédant des propriétés d'adhésion (dans ce cas l'indice de fluidité du copolymère (B) sera de préférence choisi entre 0,5 et 30 dg/min.) ou bien d'articles chargés moulés possédant une résistance au choc améliorée qui les rend particulièrement intéressants pour toute application exigeant cette qualité, notamment dans le secteur automobile et pour la fabrication d'articles ménagers et industriels.

Grâce à la remarquable stabilité dimensionnelle des compositions selon l'invention, les films obtenus par extrusion-soufflage desdites compositions (d'épaisseur généralement comprise entre 15 et 200 µm) peuvent être utilisés pour réaliser des collages devant supporter des expositions répétées à des températures par exemple comprises entre 110° et 130°C. Ils peuvent être soumis à des traitements ultérieurs, par exemple du type Corona.

Ils peuvent également entrer dans la constitution d'articles de structure complexe tels que des films multicouches obtenus par coextrusion au moyen de filières annulaires ou plates, l'(les) autre(s) couche(s) de tels films étant par exemple constituée(s) d'un film d'une matière thermoplastique telle que le polyéthylène basse densité radicalaire, le polyéthylène haute densité, le polypropylène, un polyamide ou un copolymère éthylène-acétate de vinyle hydrolysé.

Des exemples sont fournis ci-après pour illustrer l'invention.

Les normes utilisées pour mesurer les propriétés des produits mis en jeu ou obtenus sont les suivantes:

norme ASTM D 1238-73 pour l'indice de fluidité standard mesuré à 190°C sous 2,16 Kg et exprimé en dg/min.

norme ISO R 179 pour la résistance au choc Charpy exprimée en kJ/m² et mesurée, aux exceptions suivantes près, sur éprouvette non entaillée de dimensions 4 × 6 × 50 mm3.

## Exemples 1 à 5

Des compositions sont préparées par malaxage à chaud de:

x parties en poids de (A₁) un copolymère éthylène/acrylate de butyle contenant 0,44% en moles d'acrylate de butyle, ayant une densité de 0,926 et un indice de fluidité standard de 0,18 dg/min.

(100-x) parties en poids de (B) un terpolymère contenant 92,3% en moles de motifs dérivés de l'éthylène, 6,7% en moles de motifs dérivés de l'acrylate d'éthyle et 1% en moles de motifs dérivés de l'anhydride maléique, ayant un indice de fluidité standard de 20 dg/min.

Les caractéristiques des compositions obtenues figurent dans le tableau I. La température Vicat est mesurée selon la norme ASTM D 1525 et exprimée en degrés Celsius. SD est la stabilité dimensionnelle mesurée à 115°C selon la norme ASTM D 1204 et exprimée en %. RR est la résistance à la rupture exprimée en MPa et AR l'allongement à la rupture exprimé en %, ces deux grandeurs étant déterminées selon la norme ASTM D 638. TSC est la tension superficielle critique exprimée en dynes/cm et déterminée selon la norme ASTM D 2578.

Les exemples 1 et 5 sont comparitifs.

TABLEAU I

| Exemple | 1 | 2 | 3 | 4 | 5 |
|---------|-----|-----|-----|-----|-----|
| x | 100 | 75 | 50 | 25 | 0 |
| Vicat | 100 | 83 | 69 | 49 | 47 |
| TSC | 32 | -- | 35 | -- | 35 |
| SD | -3 | -3 | -6 | -15 | -20 |
| RR | 21 | 17 | 15 | 12 | 10 |
| AR | 650 | 660 | 660 | 740 | 830 |

La composition de l'exemple 3 est transformée en film de 50 µm d'épaisseur par extrusion-soufflage. Ce film est utilisé pour thermocoller à 145°C par calandrage de la mousse de polyuréthane-polyéther et du tissu de polypropylène. Les forces de pelage suivantes, déterminées selon la norme ASTM D 903-49 sont mesurées:

entre tissu et film: 13 N/5 cm

entre film et mousse: 8 N/5 cm.

Lorsque le film est en outre soumis à un traitement Corona à 45 dynes/cm, la force de pelage entre film et mousse atteint 13 N/5 cm.

Un film (de même épaisseur) du polymère $(A_1)$ seul conduit à une force de pelage entre film et mousse de 2 N/5 cm.

Exemples 6 à 8

Des compositions sont préparées par malaxage à chaud de:

x parties en poids de $(A_2)$ un copolymère éthylène/butène-1 obtenu par catalyse de type Ziegler, ayant une densité de 0,945 et un indice de fluidité standard de 0,18 dg/min.

(100-x) parties en poids du terpolymère (B) décrit aux exemples 1 à 5.

La température Vicat ainsi que la température de fusion F (exprimée en degrés Celsius) de la composition sont reportées aux tableau II ci-après. Les exemples 6 et 8 sont comparatifs.

TABLEAU II

| Exemple | 6 | 7 | 8 |
|---------|-----|-----|-----|
| x | 100 | 50 | 0 |
| F | 130 | 128 | 78 |
| Vicat | 122 | 75 | 47 |

La composition de l'exemple 7 est transformée en film de 50 µm par extrusion-soufflage. Ce film est utilisé pour thermocoller à 145°C par calandrage de la mousse de polyuréthane-polyéther et du tissu de polypropylène.

Les forces de pelage suivantes, déterminées selon la norme ASTM D 903-49 sont mesurées:
entre tissu et film: 10 N/5 cm
entre film et mousse: 6,5 N/5 cm.

Un film (de même épaisseur) du polymère (A₂) seul conduit à une force de pelage entre film et mousse de 1 N/5 cm.

### Exemples 9 à 13

Des compositions sont préparées par malaxage à chaud de:

x parties en poids de (A₃) un homopolymère de l'éthylène obtenu par voie radicalaire et ayant un indice de fluidité standard de 3 dg/min.

(100-x) parties en poids de (B) un terpolymère contenant 97,9% en moles de motifs dérivés de l'éthylène, 1,2% en moles de motifs dérivés de l'acrylate de butyle et 0,9% en moles de motifs dérivés de l'anhydride maléique et ayant un indice de fluidité standard de 4 dg/min.

La composition est extrudée à travers une filière plate en un film d'épaisseur 35 μm qu'on enduit à 297°C sur une feuille d'aluminium défilant à une vitesse de 100 m/min. L'adhérence de la composition sur le substrat est mesurée par la force de pelage dans le sens longitudinal FPL exprimée en N/15 mm et déterminée selon la norme ASTM D 903-49 (largeur de la bande de polymère: 15 mm au lieu de 25 mm). Les résultats sont reportés au tableau III, les exemples 9 et 13 étant donnés à titre comparatif.

## TABLEAU III

| Exemple | 9 | 10 | 11 | 12 | 13 |
|---------|------|------|------|------|------|
| x | 100 | 50 | 25 | 15 | 0 |
| FPL | 0,4 | 6,4 | 6,1 | 5,7 | 5,3 |

### Exemple 14 (comparatif)

On prépare une composition constituée de:

50 parties en poids d'un copolymère éthylène/butène-1 de densité égale à 0,940 et d'indice de fluidité égal à 4 dg/min. commercialisé par la deman-deresse sous la marque LOTREX PG 0456.

50 parties en poids d'hydrate d'alumine commercialisé par la société SAFIC-ALCAN sous la marque HYDRAL 710.

La préparation est effectuée par mélange sur une calandre à la température de 180°C pendant 15 minutes. A partir de ce mélange, on moule par compression à 180°C des plaques d'épaisseur 4 mm que l'on découpe ensuite en barreaux de dimensions 4 × 6 × 50 mm. La résistance au choc Charpy mesurée sur ces barreaux est égale à 7,8 kJ/m² à −30°C.

### Exemple 15

On prépare selon les conditions opératoires de l'exemple 14 une composition constituée de:

45 parties du copolymère éthylène/butène-1 utilisé à l'exemple 14.

55 parties de l'hydrate d'alumine utilisé à l'exemple 14, préalablement enrobé par un terpolymère d'indice de fluidité égal à 7,8 dg/min. et constitué de 85,9% en moles d'éthylène, 13% en moles d'acrylate d'éthyle et 1,1% en moles d'anhydride maléique. Le rapport en poids du terpolymère et de l'hydrate d'alumine est de 9/91.

La résistance au choc Charpy de la composition, mesurée comme à l'exemple 14, est égale à 55 kJ/m² à −30°C.

## Revendications

1. Composition thermoplastique constituée, pour 100 parties en poids, de 1 à 93 parties en poids d'au moins un polymère ou copolymère (A) à base d'éthylène, ayant une densité comprise entre 0,905 et 0,945 choisi parmi les copolymères d'éthylène et d'au moins une α-oléfine possédant au moins 3 atomes de carbone, et les polymères ou copolymères obtenus par voie radicalaire et ayant une densité comprise entre 0,910 et 0,935, et de 7 à 99 parties en poids d'au moins un copolymère (B) comprenant:

de 83 à 98,7% en moles de motifs dérivés de l'éthylène,
de 1 à 14% en moles de motifs dérivés d'au moins un ester de l'acide (méth)acrylique, et
de 0,3 à 3% en moles de motifs dérivés de l'anhydride maléique.

2. Composition thermoplastique selon la revendication 1, caractérisée en ce que l'indice de fluidité standard du copolymère (B) est compris entre 0,5 et 200 dg/min.

5

3. Composition thermoplastique selon l'une des revendications 1 et 2, caractérisée en ce que pour 100 parties en poids elle comprend de 1 à 67 parties en poids de polymère (A) et de 33 à 99 parties en poids de copolymère (B).

4. Composition thermoplastique comprenant, pour 100 parties en poids, de 67 à 93 parties en poids d'au moins un polymère (A) à base d'éthylène et de 7 à 33 parties en poids d'au moins un copolymère (B) à base d'éthylène et d'anhydride maléïque, et en outre au moins une charge minérale à raison de jusqu'à 100 parties en poids pour 100 parties du mélange des polymère (A) et (B), caractérisée en ce que le polymère (A) est choisi parmi les copolymères d'éthylène et d'au moins une α-oléfine possédant au moins 3 atomes de carbone et les polymères à base d'éthylène obtenus par voie radicalaire et ayant une densité comprise entre 0,910 et 0,935, et en ce que le copolymère (B) comprend:

de 83 à 98,7% en moles de motifs dérivés de l'éthylène,

de 1 à 14% en moles de motifs dérivés d'au moins un ester de l'acide (méth)acrylique, et

de 0,3 à 3% en moles de motifs dérivés de l'anhydride maléïque.

5. Composition thermoplastique selon l'une des revendications 1 à 4, caractérisée en ce que le taux de cristallinité du polymère (A) est au moins égal à 30%.

6. Composition thermoplastique selon la revendication 3, caractérisée en ce que le rapport de l'indice de fluidité standard du copolymère (B) à l'indice de fluidité standard du polymère (A) est compris entre 1 et 400.

7. Articles industriels comprenant au moins un produit obtenu par transformation d'une composition conforme à l'une des revendications 1 à 6.

**Patentansprüche**

1. Thermoplastische Zusammensetzung, die in 100 Gewichtsteilen enthält:

1 bis 93 Gewichtsteile mindestens eines Polymers oder Copolymers (A) auf der Basis von Ethylen mit einer Dichte von 0,905 bis 0,945, das unter den Copolymeren aus Ethylen und mindestens einem μ-Olefin mit mindestens 3 Kohlenstoffatomen und unter den radikalisch erhaltenen Polymeren oder Copolymeren mit einer Dichte von 0,910 bis 0,935 ausgewählt ist, und

7 bis 99 Gewichtsteile mindestens eines Copolymers (B), das

83 bis 98,7 mol-% von Ethylen abgeleitete Struktureinheiten,

1 bis 14 mol-% von mindestens einem Ester der (Meth acrylsäure abgeleitete Struktureinheiten und 0,3 bis 3 mol-% von Maleinsäureanhydrid abgeleitete Struktureinheiten enthält.

2. Thermoplastische Zusammensetzung nach Anspruch 1, dadurch gekennzeichnet, daß der Norm-Fließindex des Copolymers (B) 0,5 bis 200 dg/min beträgt.

3. Thermoplastische Zusammensetzung nach Anspruch 1 oder 2, dadurch gekennzeichnet,

daß sie in 100 Gewichtsteilen

1 bis 67 Gewichtsteile des Polymers (A) und

33 bis 99 Gewichtsteile des Copolymers (B) enthält.

4. Thermoplastische Zusammensetzung, die in 100 Gewichtsteilen enthält:

67 bis 93 Gewichtsteile mindestens eines Polymers (A) auf der Basis von Ethylen und

7 bis 33 Gewichtsteile mindestens eines Copolymers (B) auf der Basis von Ethylen und Maleinsäureanhydrid, und ferner einen anorganischen Füllstoff in einer Menge von bis zu 100 Gewichtsteilen auf 100 Teile des Gemischs der Polymere (A) und (B), dadurch gekennzeichnet, daß

das Polymer (A) ausgewählt ist unter den Copolymeren aus Ethylen und mindestens einem α-Olefin mit mindestens 3 Kohlenstoffatomen, und ·

unter den radikalisch erhaltenen Polymeren auf Ethylenbasis mit einer Dichte von 0,910 bis 0,935, und das Copolymer (B)

83 bis 98,7 mol-% von Ethylen abgeleitete Struktureinheiten,

1 bis 14 mol-% von mindestens einem Ester der (Meth)acrylsäure abgeleitete Struktureinheiten und 0,3 bis 3 mol-% von Maleinsäureanhydrid abgeleitete Struktureinheiten enthält.

5. Thermoplastische Zusammensetzung nach einem der Ansprüche 1 bis 4, dadurch gekennzeichnet, daß der Kristallinitätsgrad des Polymers (A) mindestens 30% beträgt.

6. Thermoplastische Zusammensetzung nach Anspruch 3, dadurch gekennzeichnet, daß das Verhältnis des Norm-Fließindex des Copolymers (B) zum Norm-Fließindex des Polymers (A) 1 bis 400 beträgt.

7. Technische Erzeugnisse, die mindestens ein Produkt enthalten, das durch Verarbeitung einer Zusammensetzung nach einem der Ansprüche 1 bis 6 erhalten wurde.

**Claims**

1. Thermoplastic composition consisting, per 100 parts by weight, of 1 to 93 parts by weight of at least one ethylene-based polymer or copolymer (A) which has a relative density of between 0.905 and 0.945, chosen from copolymers of ethylene and of at least one α-olefin containing at least 3 carbon atoms and the polymers or copolymers obtained by a radical route and having a relative density of between 0.910 and 0.935, and of 7 to 99 parts by weight of at least one copolymer (B) containing:

from 83 to 98.7 mol% of units derived from ethylene,

from 1 to 14 mol% of units derived from at least one ester of (meth)acrylic acid, and

from 0.3 to 3 mol% of units derived from maleic anhydride.

2. Thermoplastic composition according to Claim 1, characterized in that the standard melt index of the copolymer (B) is between 0.5 and 200 dg/min.

3. Thermoplastic composition according to either of Claims 1 and 2, characterized in that it contains, per 100 parts by weight, from 1 to 67 parts by weight of polymer (A) and from 33 to 99 parts by weight of copolymer (B).

4. Thermoplastic composition containing, per 100 parts by weight, from 67 to 93 parts by weight of at least one ethylene-based polymer (A) and from 7 to 33 parts by weight of at least one copolymer (B) based on ethylene and maleic anhydride, and in addition at least one inorganic filler in a proportion of up to 100 parts by weight per 100 parts of the mixture of polymers (A) and (B), characterized in that the polymer (A) is chosen from copolymers of ethylene and of at least one α-olefin containing at least 3 carbon atoms and the ethylene-based polymers obtained by a radical route and having a relative density of between 0.910 and 0.935, and in that the copolymer (B) contains:

from 83 to 98.7 mol% of units derived from ethylene,

from 1 to 14 mol% of units derived from at least one ester of (meth)acrylic acid, and

from 0.3 to 3 mol% of units derived from maleic anhydride.

5. Thermoplastic composition according to one of Claims 1 to 4, characterized in that the degree of crystallinity of the polymer (A) is at least equal to 30%.

6. Thermoplastic composition according to Claim 3, characterized in that the ratio of the standard melt index of the copolymer (B) to the standard melt index of the polymer (A) is between 1 and 400.

7. Industrial articles comprising at least one product obtained by conversion of a composition in accordance with one of Claims 1 to 6.